# EUROPEAN PATENT SPECIFICATION

(11) **EP 1 141 977 B1**
(45) Date of publication and mention of the grant of the patent: **31.03.2004**
(21) Application number: 99958595.3
(22) Date of filing: 12.11.1999
(51) Int. Cl.: H01B 3/44, C08L 101/10, C08K 5/42, C08J 3/24

(54) **A POWER CABLE INSULATION LAYER, A PROCESS FOR THE PREPARATION THEREOF, AND A COMPOSITION THEREFOR**
ENERGIEKABELISOLIERUNGSSCHICHT, VERFAHREN UND ZUSAMMENSETZUNG ZU DESSEN HERSTELLUNG
COUCHE ISOLANTE DE CABLE ELECTRIQUE, SON PROCEDE DE PREPARATION ET SA COMPOSITION

(30) Priority: 15.12.1998 SE 9804323
(43) Date of publication of application: 10.10.2001
(73) Proprietor: Borealis Technology Oy, 06101 Porvoo (FI)
(72) Inventor: DAMMERT, Ruth, S-426 50 V. Frölunda (SE); SULTAN, Bernt-Ake, S-444 42 Stenungsund (SE); FAGRELL, Ola, S-444 45 Stenungsund (SE)
(74) Representative: Wiklund, Erik
(86) International application number: PCT/SE1999/002057
(87) International publication number: WO 2000/036612

(56) References cited:
- WO-A1-95/17463
- WO-A1-98/14516
- US-A- 4 983 675

## Description

### Field of the invention

The present invention relates to a composition for an insulating layer of an electric power cable, to an electric power cable comprising an insulating layer of said composition, and to a process for the preparation of an insulating layer comprising the crosslinked composition.

### Technical background

Electric power cables for medium voltages (MV; 6-68 kV) and high voltages (HV; >68 kV) are composed of a plurality of polymer layers extruded around an electric conductor. The electric conductor is usually coated first with an inner semiconductor layer followed by an insulating layer, then an outer semiconductor layer followed by water barrier layers, if any, and on the outside a sheath layer. The layers of the cable are based on different types of ethylene polymers which usually are crosslinked.

Crosslinked ethylene polymers are used for the insulating layer. LDPE (low-density polyethylene, i.e. polyethylene prepared by radical polymerisation at a high pressure) is today the predominant cable insulating material.

In addition to the. polyethylene base resin insulating compositions usually contain additives to improve the physical properties of the insulating layer of the electric cable and to increase its resistance to the influence of different conditions. The total amount of the additives is generally about 0.3-5% by weight, preferably about 1-4% by weight. The additives include stabilising additives such as antioxidants to counteract decomposition due to oxidation, radiation, etc.; lubricating additives, such as stearic acid; additives for water-tree resistance, such as polyethylene glycol, silicones etc.; and crosslinking additives such as peroxides to aid in the crosslinking of the ethylene polymer of the insulating composition.

A common way to crosslink the insulating layer of a power cable is by peroxide crosslinking, i.e. to add a peroxide crosslinking agent to the insulating composition, shape the composition into a cable insulating layer, e.g. by extrusion and crosslink the insulating layer by heating to decompose the peroxide crosslinking agent. Normally about 1 to 3% by weight, preferably about 2% by weight of peroxide crosslinking agent is added to the composition.

The crosslinking is performed after the extrusion of the insulating layer in a long, e.g. about 100-200 m, multi-zone vulcanisation tube where crosslinking should take place as rapidly and completely as possible. The vulcanising tube, which preferably is of a continous vulcanising (CV) type, has at least one heating zone and at least one cooling zone and the vulcanising is initiated by the heat emitted in one or more of the heating zones of the vulcanising tube. Generally, the temperature in the heating zone(s) of the vulcanising tube is up to about 400°C. A nitrogen-gas pressure is also applied in the tube, and contributes to prevent oxidation processes by keeping away oxygen of the air and to reduce the formation of microcavities, so-called voids, in the polymer layers by reducing the expansion of the'gases resulting from the decomposition of the radical-forming crosslinking agent.

The peroxide crosslinking agents used for the crosslinking of insulating layers of electric power cables as described above present some problems, both from a technical and an environmental point of view. When they decompose, gaseous decomposition products are formed and these products cause formation of microvoids in the cable insulation, voids from which water trees may later arise during ageing of the cables. Furthermore the decomposition products may have obnoxious smell and may even cause allergies in sensitive persons.

In view of the disadvantages of the peroxide crosslinking agents it would be a technical progress if crosslinking could be achieved by way of other means without the disadvantages of the peroxide crosslinking agents.

It is also known to crosslink ethylene polymers by way of crosslinkable groups such as hydrolysable silane groups in the polymer. The crosslinking of polymers with hydrolysable silane groups is carried out by so-called moisture curing. In a first step, the silane groups are hydrolysed under the influence of water or steam, resulting in the splitting-off of alcohol and the formation of silanol groups. In a second step, the silanol groups are crosslinked by a condensation reaction splitting off water. In both steps, a so-called silanol condensation catalyst is used as a catalyst.

Silanol condensation catalysts include carboxylates of metals, such as tin, zinc, iron, lead and cobalt; organic bases; inorganic acids; and organic acids. In practice dibutyl tin dilaurate (DBTL) is generally used as the silanol condensation catalyst.

However, silanol condensation catalysts such as DBTL give poor performance at normal ambient temperatures and relative humidities. To function satisfactorily they require a sauna or water bath at an elevated temperature in the order of 70-100°C. Although the crosslinking is speeded up by increasing the temperature, it may take 6-24 hours to carry out the crosslinking for a thin LV cable and from 1 to 7 days for an MV cable, depending on thickness and curing temperature. Moreover, DBTL is a tin-organic catalyst which is negative from an environmental point of view. A particular problem is encountered in connection with crosslinking of insulating layers of medium voltage and high voltage power cables because of the difficulty for the water to reach and completely crosslink the layer. This is due to the fact that the insulating layer is covered by the outer semi-conductor layer and that the insulating layer has a substantial thickness. Generally, the insulating layer of a medium voltage power cable is at least about 2 mm thick, typically at least 2.3 mm thick and the thickness increases with the voltage of the cable. Thus, the insulating layer of a 10 kV cable typically has a thickness of about 3.6 mm and in a 20 kV cable this layer typically has a thickness of about 5.5 mm. The more layers that cover the insulating layer and the greater its thickness the more difficult it will be and the longer it will take for the water to reach and crosslink the insulating layer. Indeed, polymers containing hydrolysable silane groups have hitherto not been considered feasible as insulating layers for power cables of voltages over 20 kV, i.e. having an insulating layer thickness of more than about 5 mm, due to the excessive time needed for crosslinking.

From the above it is evident that the crosslinking of electric power cables using hydrolysable silane group containing polymers for the insulating layer is also associated with several disadvantages and that it would mean an important technical progress if crosslinking could be achieved without these disadvantages.

### Summary of the invention

It is an object of the present invention to provide a moisture curable insulating layer composition for a medium to high voltage power cable that alleviates or eliminates the above mentioned problems of the prior art.

It is another object of the present invention to provide a medium to high voltage power cable comprising a crossliriked insulating layer of the above mentioned insulating layer composition.

It is still another object of the present invention' to provide a process for preparing such a medium to high voltage power cable.

According to one aspect of the present invention it has been found that it is possible to use a crosslinkable hydrolysable silane group containing polymer as a base resin for the insulating layer of a medium to high voltage power cable if the prior art silanol condensation catalyst, such as DBTL is replaced by a particular sulphonic acid catalyst.

According to another aspect of the present invention it has been found that the crosslinking of the insulating layer may be further enhanced, particularly in connection with thick insulating layers, if when using said sulphonic acid as a silanol condensation catalyst the insulating layer composition is made more hydrophilic and/or more amorphous.

According to still another aspect of the present invention it has been found that the medium to high voltage power cable may be prepared by carrying out the crosslinking of the cable at superatmospheric pressure in the presence of steam, preferably in a vulcanising tube usually used for the crosslinking of peroxide crosslinkable power cables.

The present invention thus provides a composition for an insulating layer of a medium to high voltage power cable, characterised in that the composition comprises a crosslinkable polymer with hydrolysable silane groups, and a silanol condensation catalyst of formula I

ArSO₃H (I)

or a precursor thereof, Ar being a benzene ring substituted with at least one hydrocarbyl radical such that the total number of carbon atoms of the hydrocarbyl radical(s) is 8-20, or a naphthalene ring substituted with at least one hydrocarbyl radical such that the total number of carbon atoms of the hydrocarbyl radical(s) is 4-18, and the catalyst of formula I containing 14-28 carbon atoms in total.

The present invention further provides a medium to high voltage power cable comprising a conductor surrounded in order by an inner semi-conducting layer, an insulating layer, and an outer semi-conducting layer, characterised in that the insulating layer has a thickness of more than 2 mm and comprises the crosslinked product of a composition as defined above.

Still further, the present invention provides a process of preparing a medium to high voltage power cable as defined above, characterised in that the cable is crosslinked in the presence of steam at a superatmospheric pressure.

Further characterising features and advantages of the present invention will appear from the following description and the appended claims.

### Detailed description of the invention

A silanol condensation catalyst of the above defined type is disclosed in WO 95/17463 for the crosslinking of polymers with hydrolysable silane groups in general. However, it does not disclose the specific use of such a catalyst for the crosslinking of insulating layers of medium to high voltage power cables or that it may surprisingly overcome the particular problems associated with the crosslinking of such insulating layers. Further, as will be explained and illustrated in more detail below, this catalyst quite surprisingly gives improved water treeing characteristics to the insulating layer of a medium to high voltage power cable.

According to a particularly preferred aspect of the invention the composition of the insulating material is changed in a way that facilitates the migration of water into it. This may be achieved by incorporating comonomers containing hydrophilic functions into the matrix resin, by blending in water absorbing components, e.g. via a master.batch, into the composition or by decreasing the crystallinity of the matrix resin. The last alternative will leave a more amorphous structure with more room for small molecules lika water to migrate into it. Of course, if polar comonomers are introduced into the matrix resin they will also decrease the crystallinity and thus have a double effect. The crystalline part of the polymer matrix thus should be at the most about 60% by weight.

As examples of preferred hydrophilic functions or groups that may be introduced into the polymer (matrix resin) the following may be mentioned: siloxane, amide, anhydride, carboxylic, carbonyl, hydroxyl, and ester groups.

With regard to the silanol condensation catalyst of formula I it is preferred that the hydrocarbyl radical in formula I is an alkyl substituent with 10-18 carbon atoms. More preferably the alkyl substituent has 12 carbon atoms and is selected from dodecyl and tetrapropyl.

It is further preferred that the polymer composition includes 0.0001-3% by weight of silanol condensation catalyst.

As indicated above, the present invention provides a composition that preferably is hydrophilic and/or amorphous and that comprises a polymer with hydrolysable silane groups and a silanol condensation catalyst having the formula I. In particular, the composition is contemplated for use as an insulating layer of a medium to high voltage power cable. Other applications for the composition may, however, also be contemplated such as pipes, particularly water pipes and gas pipes, and products made by injection or rotational moulding.

With regard to the medium to high voltage power cable according to the present invention it is preferred that the insulating layer has a thickness of more than 4 mm, more preferably more than 5 mm. This corresponds approximately to a 10 kV cable and a 20 kV cable, respectively.

As mentioned above, the process according to the present invention for preparing a medium to high voltage power cable comprising the composition of the invention as the insulating layer of the cable, is characterised in that the crosslinking is carried out in the presence of steam at a superatmospheric pressure. This is in contrast to conventional crosslinking of hydrolysable silane group containing polymers which is carried out at atmospheric pressure in the presence of moisture, i.e. steam or water. Preferably the crosslinking of the present invention is carried out in the presence of saturated steam at the pressure in question. The pressure preferably lies in the range from about 0.2 MPa to about 2.5 MPa, more preferably from about 0.2 MPa to about 1.5 MPa, and most preferably from about 0.8 MPa to about 1.2 MPa. A pressure of 0.8 MPa corresponds to saturated steam of a temperature of about 170°C and 1.2 MPa corresponds to saturated steam of a temperature of about 190°C.

It is preferred, especially where the hydrophilicity is low and the crystallinity is relatively high, like when an ethylene/vinyl trimethoxysilane copolymer is used as the base resin, that the crosslinking is that the crosslinking is carried out in a vulcanising tube, such as a CV tube as described above normally used for the crosslinking of peroxide crosslinkable power cables.

In the following the crosslinkable hydrolysable silane. group containing polymer used as the base resin of the insulating layer composition according to the present invention will described.

The crosslinkable base resin generally is an olefin copolymer or graft polymer which contains hydrolysable silane groups and which is crosslinked under the influence of water and at least one silanol condensation catalyst. Specifically, the crosslinkable polymer is an ethylene copolymer or homopolymer containing crosslinkable silane groups introduced either by copolymerisation or graft polymerisation.

Preferably, the silane-containing polymer has been obtained by copolymerisation of an olefin, suitably ethylene, and an unsaturated silane compound represented by the formula

RSiR'ₙY₃₋ₙ

wherein
R is an ethylenically unsaturated hydrocarbyl, hydrocarbyloxy or (meth)acryloxy hydrocarbyl group,
R' is an aliphatic saturated hydrocarbyl group,
Y which may be same or different, is a hydrolysable organic group, and
n is 0, 1 or 2.

If there is more than one Y group, these do not have to be identical.

Special examples of the unsaturated silane compound are those wherein R₁ is vinyl, allyl, isopropenyl, butenyl, cyclohexenyl or gamma-(meth)acryloxy propyl; Y is methoxy, ethoxy, formyloxy, acetoxy, propionyloxy or an alkyl- or arylamino group; and R', if present, is a methyl, ethyl, propyl, decyl or phenyl group.

A preferred unsaturated silane compound is represented by formula

CH₂=CHSi(OA)₃

wherin A is a hydrocarbyl group having 1-8 carbon atoms, preferably 1-4 carbon atoms.

The most preferred compounds are vinyl trimethoxysilane, vinyl triethoxysilane, gamma-(meth)acryloxypropyltrimethoxysilane and vinyl triacetoxysilane or combinations of two or more thereof.

The copolymerisation of the olefin (ethylene) and the unsaturated silane compound may be carried out under any suitable conditions resulting in the copolymerisation of the two monomers.

The silane-containing polymer according to the invention suitably contains 0.001-15% by weight of the silane compound, preferably 0.01-5% by weight, most preferably 0.1-3% by weight.

Moreover, the copolymerisation (or grafting) may be implemented in the presence of one or more other comonomers which can be copolymerised (or grafted) with the two monomers. The copolymerisation (or grafting) with other comonomers besides the unsaturated silane comonomer is applied in particular when it is desired to make the crosslinkable polymer composition hydrophilic and/or amorphous. In that case the comonomer (or termonomer) should include at least one hydrophilic group, such as an acyl group, an hydroxyl group or an ester group. As nonlimiting examples of hydrophilic comonomers may be mentioned the following: (a) vinyl carboxylate esters, such as vinyl acetate and vinyl pivalate, (b) (meth)-acrylates, such as methyl(meth)acrylate, ethyl(meth)-acrylate and butyl(meth)acrylate, (c) olefinically unsaturated carboxylic acids, such as (meth)acrylic acid, maleic acid and fumaric acid, (d) (meth)acrylic acid derivatives, such as (meth)acrylonitrile and (meth)acrylic amide, and (e) vinyl ethers, such as vinyl methyl ether and vinyl phenyl ether. Amongst these comonomers, vinyl esters of monocarboxylic acids having 1-4 carbon atoms, such as vinyl acetate, and (meth)acrylates of alcohols having 1-4 carbon atoms, such as methyl(meth)-acrylate, are preferred. Especially preferred comonomers are butyl acrylate, ethyl acrylate and methyl acrylate. Two or more such olefinically unsaturated compounds may be used in combination. The term (meth)acrylic acid' is intended to embrace both acrylic acid and methacrylic acid. The hydrophilic comonomer contents of the hydrophilic copolymer may amount to as much 40% by weight of the copolymer but more normally amounts to between 3 and 20% by weight. The amount will to a great deal depend on the flexibility wanted in the resin, since the higher the comonomer content the more flexible and rubberlike will be the cable insulation.

If using a graft polymer, this may be produced e.g. by the methods described in US 3,646,155 and US 4,117,195.

Because of the increased hydrophilicity of the composition according to the above aspect of the present invention care should be taken to keep the composition out of contact with water before shaping the composition into a cable insulating layer in order to avoid undesired premature crosslinking or scorching of the composition. Alternatively or in addition a so-called scorch retarder may be added to the composition. Such scorch retarders are known per se and comprise compounds that react chemically with water such as e.g. hydrolysable silane compounds.

The silanol condensation catalyst defined above and used at the present invention is distinguished by being a benzene of naphthalene sulphonic acid that is sufficiently lipophilic to be compatible with the polymer composition to be crosslinked. To achieve such lipophilicity, the hydrocarbon group of the alkylaryl sulphonic acid must have a certain size and must, e.g. in the case where the acid is a benzene sulphonic acid, have an alkyl substituent containing at least 8 carbon atoms, an in the case where the acid is a naphthalene sulphonic acid the alkyl substituent must contain at least 4 carbon atoms. If the alkyl group does not have such a size that the lipophilicity requirement is met, the catalyst is not compatible with the polymer composition but will be realeased therefrom upon crosslinking in aqueous solution, thus impairing crosslinking efficiency.

Due to commercial availability, it is preferred that the aryl group is a benzene ring, substituted with an alkyl substituent containing 12 carbon atoms.

The currently most preferred compounds of formula I are dodecyl benzene sulphonic acid and tetrapropyl benzene sulphonic acid.

The silanol condensation catalyst used at the present invention may also be a precursor of a compound of formula I, i.e. a compound that is converted by hydrolysis to a compound of formula I. Such a precursor is the acid anhydride of the sulphonic acid compound of formula I. Another instance is a sulphonic acid of formula I that has been provided with a hydrolysable protective group, e.g. an acetyl group, which can be removed by hydrolysis to give the sulphonic acid of formula I.

The amount of silanol condensation catalyst present in the crosslinkable polymer composition generally is in the order of about 0.0001-3% by weight, preferably about 0.001-2% by weight and most preferably about 0.005-1% by weight, as based on the amount of silanol-group containing polymers in the composition. It will be appreciated that the effective amount of catalyst depends on the molecular weight of the catalyst. Thus, a smaller amount is required of a catalyst having a low molecular weight, than of a catalyst having a high molecular weight.

The catalyst is preferably added to the crosslinkable polymer in the form of a master batch, i.e. mixed with a polymer, such as a homo- or copolymer of ethylene, e.g. LDPE or EBA containing 3-30% by weight of butyl acrylate. The master batch generally contains about 0.02-5% by weight, preferably about 0.05-2% by weight of the catalyst.

The above defined specific sulphonic acid catalyst may be used alone in the crosslinkable polymer composition or combined with other silanol condensation catalysts, such as other catalysts of formula I or conventional silanol condensation catalysts, e.g. hydrolysis products of alkyl tin trichlorides; inorganic acids; and organic acids.

As indicated above, the present invention aims at alleviating or eliminating the problems of prior art insulating layer compositions for medium to high voltage power cables where mainly peroxide crosslinking has been used earlier. While theoretically an alternative to peroxide crosslinking, crosslinking of hydrolysable silane group containing polymers with conventional silanol condensation catalysts has found little or no practical use. The reason for this is the disadvantages involved such as very long crosslinking times that reduce the productivity. Moreover, it has not been considered economically feasible to crosslink silane containing insulating layers in power cables of more than 20 kV due to the thickness of the insulating layer (5 mm or more) and the difficulty of moisture curing such thick layers .

Compared to the prior art insulating compositions the insulating composition according to the present invention represents an important progress due to the substantial advantages it presents.

Thus, due to the absence of decomposable peroxide crosslinking agent the silane group containing polymer composition of the present invention may be extruded at higher melt temperatures, such as about 180-200°C, than conventional peroxide crosslinkable compositions. Without scorching these higher melt temperatures result in a higher output and a higher line speed.

Further, due to the absence of peroxide crosslinking agent no environmental pollutants from peroxide decomposition are generated. The particular silanol condensation catalyst used according to the present invention is no environmental pollutant; it is not dissolved from the polymer composition in water baths; and it does not discolour the polymer composition.

Compared to peroxide crosslinked insulating polymer compositions which require separate processing steps for the compounding of additives and soaking of the peroxide crosslinking agent, the present invention requires none of these steps and therefore results in a more simple overall process with fewer processing steps.

Thanks to fewer processing steps there is less risk of contaminating the composition which means a cleaner handling of the composition which is increasingly important the higher the intended voltage is of the cable.

It is possible to use existing vulcanising tubes for the crosslinking of the insulating composition. The only modification that may be required is to provide the vulcanising tube with an inlet for 'steam. The possibility of using existing vulcanising tubes is an important advantage of the invention and makes it possible for a cable manufacturer to change the production from peroxide crosslinked cables to moisture cured silane group containing cables with no or only a minor investment.

The crosslinking temperature is lower at the present invention than at peroxide crosslinking. Thus, while the temperature in a vulcanising tube is about 400°C at peroxide crosslinking, as mentioned above, the temperature in a vulcanising tube used for crosslinking of the silane group containing polymer composition of the present invention is preferably only about 170-190°C. This lower crosslinking temperature means that less energy is consumed for the crosslinking at the present invention.

Compared to peroxide crosslinking the cost of the crosslinking operation is about the same or may even be lower at the present invention.

Compared to crosslinking using conventional prior art silanol condensation catalysts, such as DBTL as well as compared to crosslinking with peroxides, the present invention provides a much higher crosslinking speed.

Further, it is possible to carry out the crosslinking at a much lower temperature, such as room temperature, than with conventional silanol condensation catalysts (DBTL).

A particular advantage is that it is possible to use hydrolysable silane containing polymers for the insulating layer of medium to high voltage power cables of more than 20 kV, i.e. power cables with an insulating layer that is more than 5 mm thick.

A further important advantage is that the water treeing characteristics of the insulating layer are very good and much better than e.g. for peroxide crosslinked insulating layers. This is quite surprising because the specific sulphonic acid catalyst of formula I used in the present invention is an ionic compound and ionic compounds are known to adversely affect the water treeing characteristics. So far it has not been able to explain the reason for the excellent water treeing characteristics obtained with the present invention.

Having thus explained the present invention and its advantages it will now be illustrated by way of some nonlimiting examples. All parts and percentages in the examples refer to weight, unless otherwise stated.

### Example 1

This example illustrates the excellent water-tree retarding (WTR) characteristics obtained with the insulating composition of the present invention.

A composition according to the present invention was made into a cable insulation and its dielectric strength evaluated according to the so-called Model Cable Test developed by Alcatel AG & Co, Hannover, Germany, and described in an article by Land H.G., Schädlich Hans, "Model Cable Test for Evaluating the Ageing behaviour under Water Influence of Compounds for Medium Voltage Cables", Conference Proceedings of Jicable 91, 24-28 June 1991, Versatile, France. As a value of the dielectric strength is stated 63% of Eₘₐₓ from Weibull diagram in kV/mm. The dielectric strength was measured after ageing for 1000 hrs at 9 kV/mm in 85°C/70°C water.

The insulating composition of the present invention consisted of an ethylene copolymer base resin containing 2% by weight of vinyl trimethoxy silane with an MFR₂ of 1 g/10 min and a density of 0.923 g/cm³. The composition was compounded with a master batch consisting of 88.7% by weight of ethylene/butyl acrylate copolymer (17% by weight of butyl acrylate; MFR₂ = 8 g/10 min), 5% by weight of stabilizers and 1% of lubricant, 4% by weight of SI-116 (HDTMS; hexadecyl trimethoxysilane), 0.3% by weight of Ufacid K (DBSA; dodecylbenzene sulphonic acid), and 1% by weight of isododecane.

After crosslinking of the model cable according to the invention (referred to as Cable 1 below) in a water bath at 70°C for 72 hrs. Cable 1 was tested according to the Model Cable Test indicated above.

According to this test the insulating composition of Cable 1 had a breakdown strength of Eₘₐₓ = 79.6 kV/mm at T = 0 and Eₘₐₓ = 75.7 kV/mm at T = 1000 hrs.

The corresponding values for a reference model cable (referred to as Reference Cable 1 below) where the insulating composition consisted of a standard LDPE with MFR₂ = 1.9 g/10 min and a density = 0.9225 g/cm³ and crosslinked with 2% by weight of peroxide crosslinking agent was Eₘₐₓ > 89 kV/mm at T = 0 and Eₘₐₓ = 34.3 kV/mm at T = 1000 hrs.

### Example 2

Example 1 was repeated with the exception that the master batch of the insulating composition according to the invention contained 0.7% by weight of the Ufacid K (DBSA) and 88.3% by weight of the ethylene butylacrylate copolymer. The model cable made with this composition as the insulating layer is referred to as Cable 2.

The results of the model cable test were Eₘₐₓ > 81.7 kV/mm at T = 0 and Eₘₐₓ = 54.4 kV/mm at T 1000 hrs.

The Cable 2 according to the invention and the Reference cable 1 of Example 1 were evaluated for water treeing. The results are given in Table 1.

**TABLE 1**

| | Bow-tie trees No./mm³ | Bow-tie trees Longest (µm) | Vented trees No./mm³ | Vented trees Longest (µm) |
|---|---|---|---|---|
| Cable 2 | 21 | 110 | 0.04 | 90 |
| Ref. cable 1 | 460 | 511 | 0.34 | 1070 |

It is evident from both Example 1 and Example 2 that the insulating composition according to the present invention gives superior WTR performance as an insulating layer of a medium to high voltage power cable compared to a standard peroxide crosslinked cable.

### Example 3

In order to show the improved crosslinking rate of the insulating composition of the present invention compared to an insulating composition using a conventional silanol condensation catalyst (DBTL) the following test was made.

Cables were made having a 1.5 mm² conductor surrounded by a 0.7 mm thick insulating layer.

The insulating layer of the cable according to the present invention (referred to as Cable 3) consisted of the same base resin as the insulating layer of Cable 1 in Example 1 compounded with 5% by weight of a master batch consisting of 87.3% by weight of ethylene butyl acrylate copolymer (17% by weight of butyl acrylate; MFR₂ = 8 g/10 min), 5% by weight of stabilizers and 1% of lubricant, 4% by weight of SI-116 (HDTMS), 1.7% by weight of Ufacid K, and 1% by weight of isododecane.

The insulating layer of the reference cable (referred to as Reference cable 3) consisted of the same base resin, but compounded with 5% by weight of a master batch consisting of 57.5% by weight of ethylene butyl acrylate copolymer (27% by weight of butyl acrylate), 34% by weight of LDPE, 4.5% by weight of stabilisers, 1% by weight of zinc stearate, and 3% by weight of DBTL. The master batch had an MFR₂ = 5 g/10 min.

The crosslinking rate was determined according to IEC-811-2-1-9 (hot set method) by measuring the thermal deformation at 200°C and a load of 20 N/cm² after various times of crosslinking at 23°C and 50% R.H. The percentage hot set elongation for Cable 3 with the insulating composition according to the invention was about 45, 38, and 28% after 2, 3, and 4 days of crosslinking, respectively. The percentage hot set elongation for Reference cable 3 was about 148, 102, 77 and 52% after 2, 3, 4, and 7 days of crosslinking, respectively. Although the cables tested in this example are not medium to high voltage power cables, it is nevertheless evident that the insulating composition used at the present invention crosslinks about four times faster than a conventional insulating composition.

### Example 4

The crosslinking of a medium to high voltage power cable with an insulating layer according to the present invention was tested and compared to the crosslinking of a similar cable, but with an insulating layer with a conventional DBTL silanol condensation catalyst.

The cable according to the present invention had an insulating layer with the same composition as that of Cable 3 in Example 3.

The reference cable (referred to as Reference Cable 4) had an insulating layer with the same base resin as that of Cable 4 compounded with 5% by weight of a master batch consisiting of 57% by weight of ethylene butyl acrylate copolymer (27% by weight of butyl acrylate), 34% by weight of LDPE, 5.7% by weight of stabilisers, 1% by weight of zinc stearate, and 2% by weight of DBTL. The master batch had an MFR₂ = 5 g/10 min.

The insulating layers of Cable'4 and Reference cable 4 were each 9 mm thick (30 kV cables).

Cable 4 and Reference cable 4 were crosslinked in a 90°C water bath for different, predetermined time periods. After each time period a 1.2 mm thick sample was taken 2.7 mm from the outer surface of the cable and the crosslinking was evaluated by the hot set method according to IEC-811-2-1-9 mentioned above.

Cable 4 according to the present invention had a hot set elongation of 85, 75, and 45% after 3.5, 4, and 4.5 hrs of crosslinking respectively, while Reference cable 4 had a hot set elongation of 205, 155, 130, 115, 105, 70, and 65% after 4, 4.5, 5, 5.5, 6, 7, and 8 hrs of crosslinking, respectively.

It is evident that crosslinking of medium to high voltage power cable insulating layers according to the present invention is very quick and effective compared to the crosslinking of a similar insulating layer with a conventional DBTL catalyst, and that the medium to high voltage power cable insulating composition presents a feasible alternative to conventional peroxide crosslinked insulating layers of medium to high voltage power cables.

### Example 5

Another evaluation of the crosslinking rate of the insulating layer composition according to the present invention was made in this example.

Two power cables with different insulating layers according to the present invention were made. The first .cable (referred to as Cable 5a) had an insulating layer of the same composition as Cable 3 in Example 3. The second cable (referred to as Cable 5b) had a hydrophilic base resin consisting of a terpolymer of ethylene, 17% by weight of butyl acrylate, and 2% by weight of VTMS (vinyl trimethoxysilane) compounded with 5% by weight of the same master batch as Cable 5a.

The reference cable (referred to as Reference cable 5) had an insulating layer including the same base resin as Cable 5b compounded with the same master batch as that of Reference cable 3 of Example 3.

The insulating layers of Cables 5a, 5b, and Reference cable 5 each had a thickness of 5.5 mm (20 kV cables).

Cables 5a, 5b and Reference cable 5 were crosslinked in a 90°C water bath during different, predetermined time periods. After each time period a 1.2 mm thick sample was taken 2.9 mm from the outer surface of the cable and the crosslinking was evaluated by the hot set method according to IEC-811-2-1-9 mentioned above.

Cable 5a according to the present invention failed the hot set test after 8 hrs of crosslinking, and had a hot set elongation of 45 and 35% after 12 and 17 hrs crosslinking respectively. Cable 5b according to the present invention failed the hot set test after 2 hrs of crosslinking and had a hot set elongation of 20, 15, 15 and 15% after 4, 8, 12, and 17 hrs crosslinking respectively. Reference cable 5 failed the hot set test after 17 hrs of crosslinking.

Again, this example illustrates the feasibility of the composition of the present invention as an excellent insulating layer for a medium to high voltage power cable and as a replacement for conventional insulating layers of such cables. It also illustrates the increased crosslinking rate obtained when the composition of the insulating layer is made hydrophilic.

### Example 6

In order to show the possibility of crosslinking a power cable according to the present invention with the use of vulcanising tube and the improved crosslinking rate of the insulating composition of the present invention compared to a conventional silanol condensation catalyst (DBTL) the following tests were made.

Three cables were made having a 50 mm² (8.05 mm diameter) aluminium conductor surrounded by a 0.5 mm thick semiconducting layer and then a 6.4 mm thick insulating layer. The cables did not have any outer semiconducting layer.

The composition of the insulating layer of the cables was varied. The first cable which was a cable according to the present invention (referred to as Cable 6a) had a composition corresponding to that of Cable 3 of Example 3 above (a silane group containing ethylene copolymer). The second cable which was also a cable according to the present invention (referred to as Cable 6b) had an insulating layer composition corresponding to that of Cable 5b of Example 5 above (a hydrophilic silane group containing ethylene/butyl acrylate terpolymer). The third cable which was not according to the present invention (referred to as Reference cable 6) had a composition corresponding to that of Reference cable 3 of Example 3 above (DBTL as catalyst).

After extrusion of the cables they were crosslinked in a 20 m long laboratory vulcanising tube with saturated steam at a pressure of 1.0 MPa gauge. The vulcanising tube had four heating zones with the temperatures set at 179, 178, 178 and 135°C for Cable 6a; 177, 179, 181, and 183°C for Cable 6b; and 181, 179, 181 and 184°C for Reference cable 6. After the heating zones followed a cooling zone with cooling water. The line speed was 2 m/min for all three cables.

The crosslinking was evaluated by measuring the Hot Set at 200°C and a force of 20 N/cm² of a cut of thickness 1.2 mm taken at a distance of between 2.9 and 4.1 mm from the outer surface. The obtained values appear from Table. 2:

**TABLE 2**

| Elongation in % | Directly after CV tube | After 1 day | After 4 days | After 6 days |
|---|---|---|---|---|
| Cable 6a | 60 | 45 | - | - |
| Cable 6b | 50 | 30 | - | - |
| Ref.cable 6 | broke | broke | 100 | 70 |

The crosslinking was evaluated as Hot Set for cables 6a, 6b and Reference cable 6 according to IEC-811-2-1-9 (hot set method) by measuring the thermal deformation at 200°C and a load of 20 N/cm² after various times of crosslinking at 23°C and 50% RH. Samples of 1.2 mm thickness were taken at a distance of between 2.9 and 4.1 mm from the outer surface of the insulating layer of the cables. The obtained values appear from Table 2. The percentage hot set elongation for Cable 6a was 60% and 45% after 0 days (directly after the exit from the vulcanising tube) and 1 day, respectively. The percentage hot set elongation for Cable 6b was 50%/0 days and 30%/1 day. The percentage hot set elongation for Reference cable 6 was: - (breakage)/0 days; - (breakage)/1 day; 100%/4 days; and 70%/6 days. The superiority of Cable 6a and, in particular Cable 6b of the invention over Reference cable 6 with a conventional DBTL catalyst is clearly evident.

## Claims

1. A medium to high voltage power cable comprising a conductor surrounded in order by an inner semi-conducting layer, an insulating layer, and an outer semi-conducting layer, **characteri*s*ed** in that the insulating layer has a thickness of more than 2 mm and comprises the crosslinked product of a composition that comprises a crosslinkable polymer with hydrolysable silane groups, and a silanol condensation catalyst of formula I
ArSO₃H (I)
or a precursor thereof, Ar being a benzene ring substituted with at least one hydrocarbyl radical such that the total number of carbon atoms of the hydrocarbyl radical(s) is 8-20, or a naphthalene ring substituted with at least one hydrocarbyl radical such that the total number of carbon atoms of the hydrocarbyl radical(s) is 4-18, and the catalyst of formula I containing 14-28 carbon atoms in total.

2. A medium to high voltage power cable as claimed in claim 1, wherein the insulating layer has a thickness of more than 5 mm.

3. A medium to high voltage power cable as claimed in claim 1 or 2, wherein the composition is hydrophilic.

4. A medium to high voltage power cable as claimed in claim 3, wherein the crosslinkable polymer has hydrophilic groups selected from siloxane, amide, anhydride, carboxylic, carbonyl, hydroxyl, and ester groups.

5. A medium to high voltage power cable as claimed in any one of the preceding claims, wherein the crystalline part of the polymer is at most 60% by weight.

6. A medium to high voltage power cable as claimed in any one of the preceding claims, wherein the hydrocarbyl radical in formula I is an alkyl substituent with 10-18 carbon atoms.

7. A medium to high voltage power cable as claimed in claim 6, wherein the alkyl substituent has 12 carbon atoms and is selected from dodecyl and tetrapropyl.

8. A composition as claimed in any one of the preceding claims, wherein the polymer composition includes 0.0001-3% by weight of silanol condensation catalyst.

9. A process of preparing a medium to high voltage power cable according to any one of claims 1-8, in which a conductor is surrounded in order by an inner semi-conducting layer, an insulating layer comprising a crosalinkable polymer with hydrolysable silane groups, and an outer semi-conducting layer to form a cable, **characterised in that** the cable is crosslinked in the presence of steam at a superatmospheric pressure.

10. A process according to claim 9, wherein the crosslinking is carried out in a vulcanising tube.

11. A process according to claim 9 or 10, wherein the crosslinking is carried out at a pressure of 0.2-2.5 MPa.

12. A process according to claim 11, wherein the crosslinking is carried out at a pressure of 0.8-1.2 MPa.

13. A process according to any one of claims 9-12, wherein the crosslinking is carried out in the presence of saturated steam.

## Patentansprüche

1. Kabel für Mittel- bis Hochspannungsstrom, umfassend einen Leiter, der in dieser Reihenfolge von einer inneren halbleitenden Schicht, einer isolierenden Schicht und einer äußeren halbleitenden Schicht umgeben wird, **dadurch gekennzeichnet, daß** die isolierende Schicht eine Dicke von mehr als 2 mm aufweist und das vernetzte Produkt einer Zusammensetzung umfaßt, die ein vernetzbares Polymer mit hydrolysierbaren Silangruppen und einen Silanolkondensations-Katalysator der Formel I
ArSO₃H (I)
oder eine Vorstufe davon umfaßt, wobei Ar ein Benzolring, der mit mindestens einem Kohlenwasserstoffrest substituiert ist, so daß die Gesamtzahl der Kohlenstoffatome des Kohlenwasserstoffrests (der Kohlenwasserstoffreste) 8 bis 20 beträgt, oder ein Naphthalinring, der mit mindestens einem Kohlenwasserstoffrest substituiert ist, so daß die Gesamtzahl der Kohlenstoffatome des Kohlenwasserstoffrests (der Kohlenwasserstoffreste) 4 bis 18 beträgt, ist, und der Katalysator der Formel I insgesamt 14 bis 28 Kohlenstoffatome enthält.

2. Kabel für Mittel- bis Hochspannungsstrom nach Anspruch 1, wobei die isolierende Schicht eine Dicke von mehr als 5 mm aufweist.

3. Kabel für Mittel- bis Hochspannungsstrom nach Anspruch 1 oder 2, wobei die Zusammensetzung hydrophil ist.

4. Kabel für Mittel- bis Hochspannungsstrom nach Anspruch 3, wobei das vernetzbare Polymer hydrophile Gruppen aufweist, die aus Siloxan-, Amid-, Anhydrid-, Carboxyl-, Carbonyl-, Hydroxyl- und Estergruppen ausgewählt sind.

5. Kabel für Mittel- bis Hochspannungsstrom nach einem der vorstehenden Ansprüche, wobei der kristalline Teil des Polymers höchstens 60 Gew.-% beträgt.

6. Kabel für Mittel- bis Hochspannungsstrom nach einem der vorstehenden Ansprüche, wobei der Kohlenwasserstoffrest in der Formel I ein Alkylsubstituent mit 10 bis 18 Kohlenstoffatomen ist.

7. Kabel für Mittel- bis Hochspannungsstrom nach Anspruch 6, wobei der Alkylsubstituent 12 Kohlenstoffatome aufweist und aus Dodecyl und Tetrapropyl ausgewählt ist.

8. Zusammensetzung nach einem der vorstehenden Ansprüche, wobei die Polymerzusammensetzung 0,0001 bis 3 Gew.-% Silanolkondensations-Katalysator einschließt.

9. Verfahren zur Herstellung eines Kabels für Mittel- bis Hochspannungsstrom nach einem der Ansprüche 1 bis 8, bei dem ein Leiter in dieser Reihenfolge von einer inneren halbleitenden Schicht, einer isolierenden Schicht, die ein vernetzbares Polymer mit hydrolysierbaren Silangruppen umfaßt, und einer äußeren halbleitenden Schicht umgeben wird, wodurch ein Kabel gebildet wird, **dadurch gekennzeichnet, daß** das Kabel in Gegenwart von Dampf bei Überdruck vernetzt wird.

10. Verfahren nach Anspruch 9, wobei das Vernetzen in einem Vulkanisierrohr erfolgt.

11. Verfahren nach Anspruch 9 oder 10, wobei das Vernetzen bei einem Druck von 0,2 bis 2,5 MPa durchgeführt wird.

12. Verfahren nach Anspruch 11, wobei das Vernetzen bei einem Druck von 0,8 bis 1,2 MPa durchgeführt wird.

13. Verfahren nach einem der Ansprüche 9 bis 12, wobei das Vernetzen in Gegenwart von gesättigtem Dampf durchgeführt wird.

## Revendications

1. Câble électrique moyenne à haute tension comprenant un conducteur entouré dans cet ordre par une couche semi-conductrice interne, une couche isolante et une couche semi-conductrice externe, **caractérisé en ce que** la couche isolante a une épaisseur supérieure à 2 mm et comprend le produit réticulé d'une composition qui comprend un polymère réticulable avec des groupes silanes hydrolysables et un catalyseur de condensation de silanol de formule I
ArSO₃H (I)
ou un précurseur de celui-ci, Ar étant un cycle benzénique substitué par au moins un radical hydrocarboné de telle sorte que le nombre total d'atomes de carbone du ou des radicaux hydrocarbonés est 8-20, ou un cycle naphtalène substitué par au moins un radical hydrocarboné de telle sorte que le nombre total d'atomes de carbone du ou des radicaux hydrocarbonés est 4-18, et le catalyseur de formule I contenant 14-28 atomes de carbone au total.

2. Câble électrique moyenne à haute tension selon la revendication 1 où la couche isolante a une épaisseur supérieure à 5 mm.

3. Câble électrique moyenne à haute tension selon la revendication 1 ou 2 où la composition est hydrophile.

4. Câble électrique moyenne à haute tension selon la revendication 3 où le polymère réticulable a des groupes hydrophiles choisis parmi les groupes siloxanes, amides, anhydrides, carboxyliques, carbonyles, hydroxyles et esters.

5. Câble électrique moyenne à haute tension selon l'une quelconque des revendications précédentes où la partie cristalline du polymère représente au plus 60 % en masse.

6. Câble électrique moyenne à haute tension selon l'une quelconque des revendications précédentes où le radical hydrocarboné dans la formule I est un substituant alkyle ayant 10-18 atomes de carbone.

7. Câble électrique moyenne à haute tension selon fa revendication 6 où le substituant alkyle a 12 atomes de carbone et est choisi parmi dodécyle et tétrapropyle.

8. Composition selon l'une quelconque des revendications précédentes où la composition polymère inclut 0,0001-3 % en masse de catalyseur de condensation de silanol.

9. Procédé de préparation d'un câble électrique moyenne à haute tension selon l'une quelconque des revendications 1 à 8 dans lequel un conducteur est entouré dans cet ordre par une couche semi-conductrice interne, une couche isolante comprenant un polymère réticulable avec des groupes silanes hydrolysables et une couche semi-conductrice externe pour former un câble, **caractérisé en ce que** le câble est réticulé en présence de vapeur à une pression superatmosphérique.

10. Procédé selon la revendication 9 où la réticulation est réalisée dans un tube de vulcanisation.

11. Procédé selon la revendication 9 ou 10 où la réticulation est réalisée à une pression de 0,2-2,5 MPa.

12. Procédé selon la revendication 11 où la réticulation est réalisée à une pression de 0,8-1,2 MPa.

13. Procédé selon l'une quelconque des revendications 9 à 12 où la réticulation est réalisée en présence de vapeur saturée.
